Europäisches Patentamt

European Patent Office

Office européen des brevets

(11) Veröffentlichungsnummer: **0 178 482**
**A2**

(12) **EUROPÄISCHE PATENTANMELDUNG**

(21) Anmeldenummer: 85111830.7

(22) Anmeldetag: 18.09.85

(51) Int. Cl.⁴: **H 01 G 4/38**
**H 01 G 4/42**

(30) Priorität: 17.10.84 DE 3438062

(43) Veröffentlichungstag der Anmeldung:
23.04.86 Patentblatt 86/17

(84) Benannte Vertragsstaaten:
CH DE FR GB IT LI NL SE

(71) Anmelder: Roederstein Spezialfabriken für
Bauelemente der Elektronik und Kondensatoren der
Starkstromtechnik GmbH
Ludmillastrasse 23/25
D-8300 Landshut(DE)

(72) Erfinder: Zankl, Franz Xaver
Reutherfurth 1a
D-8359 Fürstenstein(DE)

(72) Erfinder: Rybarczik, Dieter
Lusenstrasse 8
D-8391 Ruderting(DE)

(72) Erfinder: Laxy, Helmut
Reitbergstrasse 16
D-8391 Büchlberg(DE)

(72) Erfinder: Weigl, Walter
Hopfengarten 3
D-8391 Fürsteneck(DE)

(72) Erfinder: Höppler, Josef
Hinterberg 32
D-8359 Oberpolling(DE)

(74) Vertreter: Dipl.-Phys.Dr. Manitz Dipl.-Ing., Dipl.-Wirtsch.
Finsterwald Dipl.-Chem.Dr. Heyn Dipl.-Phys. Rotermund
Morgan, B.Sc.(Phys)
Robert-Koch-Strasse 1
D-8000 München 22(DE)

(54) Störschutz-Kondensator und Verfahren zu seiner Herstellung.

(57) Es wird eine Störschutz-Kondensatoranordnung aus mehreren Wickelkondensatoren beschrieben, die parallel zueinander angeordnet und in Form einer Sternschaltung miteinander verbunden sind. Zwecks Ermöglichung einer vollautomatischen Fertigung und zwecks Vermeidung von Induktivitäts- und Symmetrierproblemen werden die Kondensatoren auf einem gemeinsamen Träger angebracht, stirnseitig kontaktiert und mit parallel zur Stirnseite verlaufenden Anschlußdrähten versehen. Diese Anschlußdrähte werden mit Überstand durch Bohrungen des Trägers geführt, wobei die in einer Ebene gelegenen Anschlußdrähte an ihren über den Träger vorstehenden freien Enden mit einer Drahtbrücke verlötet werden. Ein Außenanschlußelement verläuft im westlichen parallel zu den Anschlußdrähten.

FIG. 3

Die Erfindung betrifft eine Störschutz-Kondensatoranordnung, bestehend aus mehreren Wickelkondensatoren, die mit parallel zueinander verlaufenden Achsen nebeneinander angeordnet und elektrisch in Form einer Sternschaltung miteinander verbunden sind. Ferner ist die Erfindung auf ein Verfahren zur Herstellung einer solchen Störschutz-Kondensatoranordnung gerichtet.

Störschutz-Kondensatoranordnungen dieser Art sind bekannt und dienen dazu, hochfrequenztechnisch optimale Verhältnisse zu schaffen.

Aus der europäischen Patentanmeldung 81 060 ist eine Funk-entstöranordnung in Sternschaltung bekannt, bei der die X- und Y-Kondensatoren in einem einzigen Wickel zusammengefasst sind, dessen eine Stirnseite zum Zwecke der Verringerung von Störinduktivitäten mit einer den durchgehenden Haupt-belag kontaktierenden Metallschicht versehen ist, während an der gegenüberliegenden Stirnseite die drei Anschlüsse herausgeführt sind. Nachteilig ist bei dieser bekannten Anordnung vor allem, daß die Einzelkondensatoren für sich nicht genau prüfbar sind, daß im Falle des Ausfalls eines der Einzelkondensatoren die gesamte Schaltungsanordnung geschädigt oder unbrauchbar wird, und daß trotz der Verwendung einer Metallbeschichtung an einer Stirnfläche störende Induktivitätserscheinungen nicht vollständig ausgeschaltet werden können. Ein weiterer in der Praxis ganz wesentlicher Nachteil besteht darin, daß diese bekannte Schaltungsanordnung nicht in Form einer regenerierbaren Anordnung ausgestaltet werden kann.

Aufgabe der vorliegenden Erfindung ist es, die Störschutz-Kondensatoranordnung der eingangs definierten Art in der Weise auszubilden, daß unter Vermeidung von Induktivitäts-und Symmetrierproblemen eine besonders wirtschaftliche, insbesondere vollautomatische Fertigung unter Gewährleistung einer hohen Funktions- und Betriebssicherheit ermöglicht wird.

Gelöst wird diese Aufgabe nach der Erfindung dadurch, daß die Kondensatoren auf einem gemeinsamen Träger angebracht sind, daß die Kondensatoren stirnseitig kontaktiert und mit parallel zur jeweiligen Stirnseite verlaufenden Anschlußdrähten versehen sind, daß die Anschlußdrähte mit Überstand durch im wesentlichen dem Drahtdurchmesser entsprechende Bohrungen des Trägers geführt sind, daß die in einer Ebene und an den ersten Stirnseiten der Kondensatoren gelegenen Anschlußdrähte an ihren über den Träger vorstehenden freien Enden mit einer Drahtbrücke verlötet sind, und daß die ebenfalls über den Träger überstehenden freien Enden der den zweiten Stirnseiten der Kondensatoren zugeordneten Anschlußdrähte jeweils mit einem Außenanschlußelement verlötet sind, das zumindest im Bereich der Anschlußdrähte im wesentlichen parallel zu diesen verläuft.

Durch die Verwendung eines Trägers, der bevorzugt aus einer Kunststoffplatte aus sich mit Gießharz verbindenden Termoplasten besteht, und die Anordnung sämtlicher Lötstellen auf der den Kondensatoren gegenüberliegenden Seite dieses Trägers wird es möglich, unter Vermeidung einer Leiterplatte sämtliche Lötstellen gleichzeitig zu bilden, und zwar bevorzugt im Schwallbad oder unter Verwendung einer Napfbadlötung.

Nach einer vorteilhaften Ausführungsform der Erfindung ist die auf der von den Kondensatoren abgewandten Rückseite des Trägers vorgesehene Drahtbrücke durch wenigstens eine Klemmaufnahme in ihrer Sollposition gehalten. In diese Klemmaufnahme kann die jeweilige Drahtbrücke eingerastet werden.

Der Überstand der freien Enden der Anschlußdrähte über die Rückseite des Trägers entspricht etwa dem Durchmesser der Drahtbrücke, was die Erzielung einwandfreier Lötstellen begünstigt.

Die Außenanschlußelemente, die jeweils mit einem Anschlußdraht über eine an der Trägerrückseite ausgebildete Lotbrücke verbunden sind, bestehen bevorzugt aus Litzen, die auf eine solche Länge abisoliert sind, daß bei am Träger aufstehender Isolierung der gewünschte Überstand an der Trägerrückseite erhalten wird.

Die fertig verlötete Einheit aus Kondensatoren, Träger und Anschlüssen wird bevorzugt in einen Kunststoffbecher eingesetzt und mit einem Gießharz vergossen. Der Träger stellt demgemäß ein verlorenes, bevorzugt aus wärmefestem Kunststoff, z.B. aus Polyester, bestehendes Bauteil dar.

Ein bevorzugtes Verfahren zur Herstellung einer Kondensatoranordnung nach der Erfindung kennzeichnet sich dadurch, daß die Einzelkondensatoren mittels ihrer Bohrungen in einem Träger durchsetzenden Anschlußdrähte durch einen Steckvorgang nebeneinander auf dem Träger fixiert werden, daß benachbart den einer Stirnseite der Kondensatoren zugeordneten, den Träger durchsetzenden Anschlußdrähten an der Trägerrückseite eine Verbindungsbrücke angebracht wird und neben den der anderen Stirnseite der Kondensatoren zugeordneten Anschlußdrähten Außenanschlußelemente durch Bohrungen im Träger gesteckt werden, und daß anschließend an der Rückseite des Trägers die Anschlußdrähte der einen Seite mit der Verbindungsbrücke und die
Anschlußdrähte der anderen Seite jeweils mit dem benachbarten Außenanschlußelement verlötet werden.

Zweckmäßigerweise werden alle Lötstellen gemeinsam in einem
Schwallbad gebildet, aber gemäß einer Ausführungsvariante der
Erfindung ist auch vorgesehen, zumindest einzelne Lötstellen
durch Napfbadlötung zu bilden, wie dies im einzelnen in der
Patentanmeldung P 34 21 28o beschrieben ist.

Weitere besonders vorteilhafte Ausgestaltungen der Erfindung
sind in den Unteransprüchen angegeben.

Die Erfindung wird nachfolgend anhand eines Ausführungsbeispiels
unter Bezugnahme auf die Zeichnung erläutert; in der Zeichnung
zeigt:

Figur 1 eine schematische Stirnansicht einer zum Einsetzen in
         einen Becher und zum Vergießen bereiten Kondensatoranordnung nach der Erfindung,

Figur 2 eine Unteransicht der Anordnung nach Figur 1, und

Figur 3 eine Seitenansicht der Anordnung nach Figur 1.

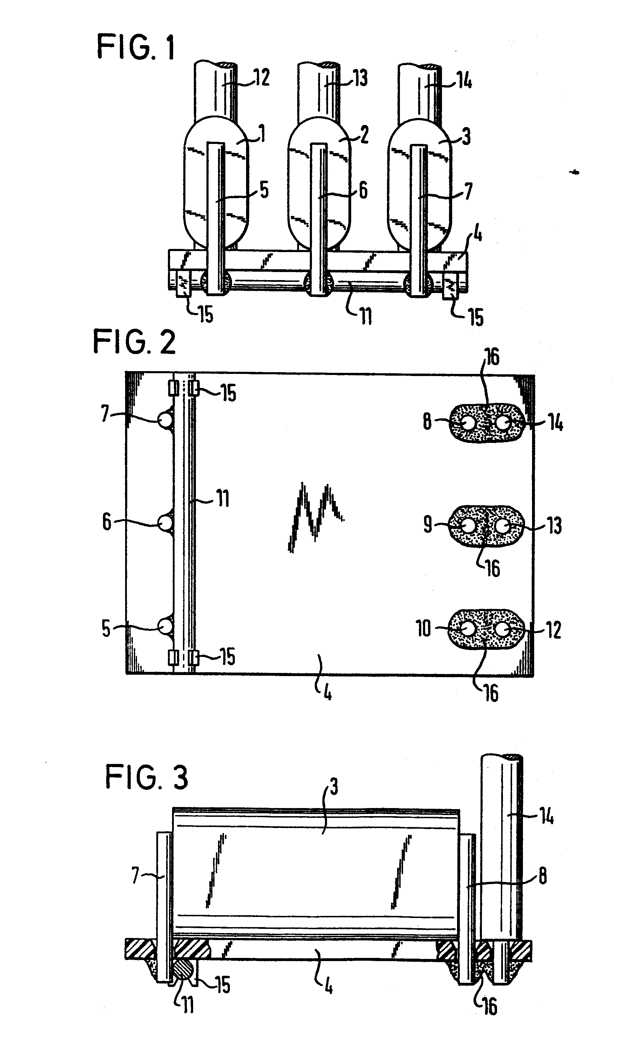

Figur 1 zeigt drei nebeneinander angeordnete Wickelkondensatoren
1, 2, 3, welche auf einem plattenförmigen Träger 4 aus Kunststoffmaterial, insbesondere aus einem sich mit Gießharz verbindenden Termoplasten, abgestützt sind. Dieser Träger 4 dient
gleichzeitig als Bauteilträger und als Element zur Ermöglichung einer automatischen Fertigung.

Die Kondensatoren 1, 2, 3 sind an ihren jeweiligen Stirnseiten mit Anschlußdrähten 5, 6, 7 bzw. 8, 9, 1o kontaktiert, wobei die parallel zu den Stirnseiten verlaufenden Anschlußdrähte durch vorzugsweise angesenkte Bohrungen in der Trägerplatte 4 gesteckt sind.

Der gegenseitige Abstand der einzelnen Kondensatoren 1, 2, 3 kann entsprechend den jeweiligen Erfordernissen vorgegeben werden, und es ist auch möglich, zwischen diesen Kondensatoren Trennwände vorzusehen.

Die Anschlußdrähte 5, 6, 7, die bevorzugt mit den äußeren Windungen der Kondensatoren verbunden sind, werden auf der den Kondensatoren gegenüberliegenden Seite der Trägerplatte 4 mittels einer Drahtbrücke 11 miteinander verbunden, so daß die gewünschte Sternschaltung entsteht.

Der Überstand der freien Enden der Anschlußdrähte entspricht etwa dem Durchmesser der Drahtbrücke 11, oder er übersteigt dieses Maß geringfügig.

Die Drahtbrücke 11 kann entweder im Träger 4 integriert oder mittels Klemmaufnahmen 15 gehaltert werden. Die elektrische Verbindung zwischen den Anschlußdrähten 5, 6, 7 und dieser Verbindungsbrücke 11 wird durch Löten geschaffen.

Die den Anschlußdrähten 5, 6, 7 gegenüberliegenden, den anderen Stirnseiten der Kondensatoren zugeordneten Anschlußdrähte 8, 9, 1o sind mit Außenanschlußlitzen 12, 13, 14 elektrisch verbunden.

---

Die in Figur 2 gezeigte Unteransicht der Anordnung nach
Figur 1 läßt die Ausbildung der Lötverbindungen zwischen
den Anschlußdrähten 5, 6, 7 und der Drahtbrücke 11 sowie
zwischen den Anschlußdrähten 8, 9, 1o und den Außenanschlußlitzen 12, 13 ,14 erkennen.

Sämtliche einem Kondensator zugeordneten Anschlußelemente
liegen dabei jeweils auf einer Geraden, wobei sich die
Drahtbrücke 11, die mittels Klemmaufnahmen 15 gehaltert
ist, unmittelbar angrenzend an die Anschlußdrähte 5, 6, 7
in Querrichtung erstreckt.

Die freien Enden der Anschlußdrähte 8, 9, 1o und der
Außenanschlußlitzen 12, 13, 14 liegen ebenfalls sehr nahe
beieinander, so daß eine Lötverbindung 16 problemfrei zu
erzielen ist.

Die Seitenansicht nach Figur 3 läßt erkennen, daß sämtliche
Bestandteile, nämlich die einzelnen Kondensatoren mit ihren
Anschlußdrähten und auch die Außenanschlußlitzen 12 durch
Steckvorgänge in der Trägerplatte 4 bereits eindeutig lagefixiert werden können. Die Relativlage der miteinander zu
verbindenden Elemente ist dabei optimal und gestattet damit
ein gemeinsames Löten aller sechs Lötstellen im Schwallbad
mit gleichzeitiger Verbindung von X- und Y-Kapazität an der
Rückseite der Trägerplatte 4, die beim Vergießen der fertigen
Kondensatoranordnung in einem Becher zu einem verlorenen
Bauteil wird.

# MANITZ, FINSTERWALD & ROTERMUND

**0178482**

Firma
Ernst Roederstein GmbH
Spezialfabrik für Kondensatoren
Ludmillastraße 23/25

8300 Landshut

DEUTSCHE PATENTANWÄLTE
DR. GERHART MANITZ · DIPL.-PHYS.
MANFRED FINSTERWALD · DIPL.-ING., DIPL.-WIRTSCH.-ING
HANNS-JÖRG ROTERMUND · DIPL.-PHYS.
DR. HELIANE HEYN · DIPL.-CHEM.
WERNER GRÄMKOW · DIPL.-ING. (1939-1982)

BRITISH CHARTERED PATENT AGENT
JAMES G. MORGAN · B. SC. (PHYS.), D.M.S.

ZUGELASSENE VERTRETER BEIM EUROPÄISCHEN PATENTAMT
REPRESENTATIVES BEFORE THE EUROPEAN PATENT OFFICE
MANDATAIRES AGRÉÉS PRÈS L'OFFICE EUROPÉEN DES BREVETS

8000 MÜNCHEN 22 · ROBERT-KOCH-STRASSE 1
TELEFON (0 89) 22 42 11 · TELEX 5 29 672 PATMF
TELEFAX (0 89) 29 75 75 (Gr. II + III)
TELEGRAMME INDUSTRIEPATENT MÜNCHEN

München, den  18.09.1985
P/Ha-R 2486

# ANSPRÜCHE

Störschutz-Kondensator und Verfahren zu seiner Herstellung

1. Störschutz-Kondensatoranordnung, bestehend aus mehreren Wickelkondensatoren, die mit parallel zueinander verlaufenden Achsen nebeneinander angeordnet und elektrisch in Form einer Sternschaltung miteinander verbunden sind, dadurch g e k e n n z e i c h n e t , daß die Kondensatoren (1, 2, 3) auf einem gemeinsamen Träger (4) angebracht sind, daß die Kondensatoren (1, 2, 3) stirnseitig kontaktiert und mit parallel zur jeweiligen Stirnseite verlaufenden Anschlußdrähten (5, 6, 7) versehen sind, daß die Anschlußdrähte (5, 6, 7) mit Überstand durch im wesentlichen dem Drahtdurchmesser entsprechende Bohrungen des Trägers (4) geführt sind, daß die in einer Ebene und an den ersten Stirnseiten der Kondensatoren (1, 2, 3) gelegenen Anschlußdrähte (5, 6, 7) an ihren über den Träger (4) vorstehenden freien Enden mit einer Drahtbrücke (11) verlötet sind, und daß die ebenfalls über
den Träger (4) überstehenden freien Enden der den zweiten
Stirnseiten der Kondensatoren (1, 2, 3) zugeordneten
Anschlußdrähte (8, 9, 1o) jeweils mit einem Außenanschlußelement (12, 13, 14) verlötet sind, das zumindest im Bereich
der Anschlußdrähte (8, 9, 1o) im wesentlichen parallel
zu diesen verläuft.

2. Kondensatoranordnung nach Anspruch 1, dadurch g e k e n n -
z e i c h n e t , daß der Träger (4) plattenförmig ausgebildet ist.

3. Kondensatoranordnung nach Anspruch 1, dadurch g e k e n n -
z e i c h n e t , daß der Träger (4) rahmenförmig ausgebildet
ist.

4. Kondensatoranordnung nach Anspruch 1, dadurch g e k e n n -
z e i c h n e t , daß die auf der von den Kondensatoren
(1, 2, 3) abgewandte Rückseite des Trägers (4) vorgesehene
Drahtbrücke (11) durch wenigstens eine Klemmaufnahme (15)
in ihrer Sollposition gehalten ist.

5. Kondensatoranordnung nach einem der vorangehenden Ansprüche,
dadurch g e k e n n z e i c h n e t , daß der Überstand
der freien Enden der Anschlußdrähte (5, 6, 7; 8, 9, 1o) etwa
gleich dem Durchmesser der Drahtbrücke (11) ist.

6. Kondensatoranordnung nach Anspruch 4, dadurch g e k e n n -
z e i c h n e t , daß bezüglich der Lötstellen versetzt im
Bereich beider Enden der Drahtbrücke (11) Klemmaufnahmen (15)
vorgesehen sind.

---

7. Kondensatoranordnung nach einem der vorangehenden Ansprüche, dadurch g e k e n n z e i c h n e t , daß die im Träger (4) vorgesehenen Bohrungen zur Aufnahme der Außenanschlußelemente (12, 13, 14) unmittelbar benachbart den Bohrungen für die Anschlußdrähte (8, 9, 1o) vorgesehen sind.

8. Kondensatoranordnung nach Anspruch 7, dadurch g e k e n n - z e i c h n e t , daß die jeweils einem Kondensator (5, 6, 7) zugeordneten Bohrungen im Träger (4) auf einer Geraden gelegen sind.

9. Kondensatoranordnung nach einem der vorhergehenden Ansprüche, dadurch g e k e n n z e i c h n e t , daß jeweils ein Außen- anschlußelement (12, 13, 14) und ein Anschlußdraht (8, 9, 1o) über eine an der Trägerrückseite ausgebildete Lotbrücke (16) miteinander verbunden sind.

1o. Kondensatoranordnung nach einem der vorangehenden Ansprüche, dadurch g e k e n n z e i c h n e t , daß die Außenanschluß- elemente (12, 13, 14) aus Litzen, Drähten oder Steckerfahnen bestehen.

11. Kondensatoranordnung nach einem oder mehreren der voran- gehenden Ansprüche, dadurch g e k e n n z e i c h n e t , daß die Kondensatoren (5, 6, 7) aus metallisierten Kondensatoren bestehen und mit gegenseitigem Abstand aufliegend auf dem Träger (4) angeordnet sind.

12. Kondensatoranordnung nach einem der vorhergehenden Ansprüche, dadurch g e k e n n z e i c h n e t , daß die Drahtbrücke (11) in den Träger (4) integriert ist.

---

0178482

- 4 -

13. Kondensatoranordnung nach einem der voranstehenden Ansprüche, dadurch g e k e n n z e i c h n e t , daß die
fertig verlötete Einheit aus Kondensatoren, Träger und
Anschlüssen in einen Kunststoffbecher eingesetzt und
mit einem Gießharz vergossen ist.

14. Verfahren zur Herstellung einer Kondensatoranordnung
nach einem oder mehreren der vorhergehenden Ansprüche,
dadurch g e k e n n z e i c h n e t , daß die Einzelkondensatoren mittels ihrer Bohrungen in einem Träger
durchsetzenden Anschlußdrähte durch einen Steckvorgang
nebeneinander auf dem Träger fixiert werden, daß benachbart den einer Stirnseite der Kondensatoren zugeordneten, den Träger durchsetzenden Anschlußdrähten an
der Trägerrückseite eine Verbindungsbrücke angebracht
wird und neben den der anderen Stirnseite der Kondensatoren zugeordneten Anschlußdrähten Außenanschlußelemente
durch Bohrungen im Träger gesteckt werden, und daß
anschließend an der Rückseite des Trägers die Anschlußdrähte der einen Seite mit der Verbindungsbrücke und die
Anschlußdrähte der anderen Seite jeweils mit dem benachbarten Außenanschlußelement verlötet werden.

15. Verfahren zur Herstellung einer Kondensatoranordnung
nach Anspruch 14, dadurch g e k e n n z e i c h n e t ,
daß alle Lötstellen gemeinsam in einem Schwallbad gebildet werden.

16. Verfahren zur Herstellung einer Kondensatoranordnung
nach Anspruch 14, dadurch g e k e n n z e i c h n e t ,
daß zumindest einzelne Lötstellen durch Napfbadlötung
gebildet werden.

---

FIG. 1

FIG. 2

FIG. 3